# EUROPEAN PATENT APPLICATION

(11) **EP 4 535 848 A1**
(43) Date of publication of application: **09.04.2025**
(21) Application number: 23815189.8
(22) Date of filing: 30.05.2023
(51) Int. Cl.: H04W 16/14

(54) **ELECTRONIC DEVICE AND METHOD FOR DYNAMIC SPECTRUM SHARING, AND STORAGE MEDIUM**

(30) Priority: 02.06.2022 CN 202210624441
(71) Applicant: Sony Group Corporation, Tokyo 108-0075 (JP)
(72) Inventor: SUN, Chen, Beijing 100027 (CN); WANG, Shuo, Beijing 100027 (CN)
(74) Representative: D Young & Co LLP
(86) International application number: PCT/CN2023/097038
(87) International publication number: WO 2023/232010

(57) **Abstract**

The present disclosure relates to an electronic device and method for dynamic spectrum sharing, and a storage medium. Various embodiments for blockchain-based spectrum sharing and interference control are described. In one embodiment, an electronic device for a first secondary user comprises a processing circuit. The processing circuit is configured to: receive an authorization response message from a spectrum access system (SAS), wherein the authorization response message comprises information of one or more protective points; determine, at least on the basis of a transmitting parameter of the electronic device, the position of a first protective point among the one or more protective points, and a first frequency of an operation, interference power of the electronic device to the first protective point at the first frequency; and record interference information and an interference threshold requirement of the first protective point to a blockchain network, wherein the interference information comprises the interference power of the electronic device to the first protective point, and is used by the blockchain network to control aggregated interference of one or more secondary users to the first protective point.

## Description

### TECHNICAL FIELD

The present disclosure generally relates to wireless communications technologies, including electronic devices, method and storage medium for dynamic spectrum sharing and aggregation interference control.

### BACKGROUND

Radio spectrum is the basis of a variety of wireless communication systems such as radar and cellular communication systems. A specific frequency range in the radio spectrum can be divided into frequency bands or channels, and allocated to different entities, for different purposes, or utilized at different geographical locations. Although frequency allocation is highly valued and generally subject to strict regulation, depending on frequency allocation alone cannot fully meet increasing frequency utilization requirements of wireless communication due to limitation of available spectrums. With application of communications technologies, network devices are deployed more densely, and a quantity of terminals in various forms such as mobile phones, Internet of Things devices, and wearable devices rapidly increases. Accordingly, requirements for spectrum resources are increasing, especially for frequency bands below 6GHz that are applicable to mobile communication. Due to heterogeneous and dynamic services, a conventional static spectrum management solution can merely realize relatively low spectrum utilization, resulting in waste of spectrum resources. Therefore, a dynamic spectrum sharing technology is proposed, so that a secondary user can detect and utilize an idle spectrum of a primary user by means of spectrum sensing or a database, improving spectrum utilization.

Dynamic spectrum access can enable sharing of an available spectrum between multiple users, and a Spectrum Access System (SAS) is responsible for managing sharing access to the spectrum. For example, the available spectrum includes a commercial 3.5GHz frequency band and an unlicensed frequency band (such as a television white space (TVWS) or an unallocated television channel).

In some scenarios, the SAS can control spectrum access between users with different spectrum access permissions or priorities. The SAS can implement a spectrum management policy for users of each priority. For example, the SAS can protect spectrum use of a primary user of a higher priority from harmful interference generated by a secondary user of a lower priority. In some cases, the primary user can be an incumbent user, such as military or other government users, and the users can already access such spectrums before sharing the spectrums with other non-incumbent (or lower priority) secondary users.

Generally, there are a relatively small number of primary users, and a frequency spectrum utilization rate of the primary users is lower than that of the secondary users. Ideally, on the premise that interference to the primary user is maintained at an acceptable level, it is guaranteed that the secondary user can share a spectrum in a manner of meeting quality of service.

### SUMMARY

A first aspect of the present disclosure relates to a method for a first secondary user, including: receiving an authorization response message from a Spectrum Access System (SAS), where the authorization response message includes information of one or more protection points; determining an interference power of the electronic device to a first protection point in the one or more protection points at a first frequency at which the first protection point operates, based at least on transmission parameters of the electronic device, a location of the first protection point and the first frequency; and recording an interference threshold requirement of the first protection point and interference information into a blockchain network, where the interference information includes an interference power of the electronic device to the first protection point, to be used by the blockchain network to control aggregate interference of one or more secondary users to the first protection point.

The first aspect of the present disclosure optionally relates to a method for a first secondary user, including: obtaining, from a blockchain network, a remove list for controlling use of a first frequency; sending a transaction request message to a second secondary user based on the remove list including the first secondary user, the transaction request message suggesting to the second secondary user transfer, to the first secondary user, of use of the first frequency during activation of an associated dynamic protection area; receiving a transaction approval message from the second secondary user, the transaction approval message approving the transfer; and recording the transaction request message into the blockchain network, to be used by the blockchain network to update the remove list.

The first aspect of the present disclosure further relates to an electronic device for implementing the method for the first secondary user, and the electronic device includes a processing circuit to perform corresponding operations.

A second aspect of the present disclosure relates to a method for blockchain, including: recording first interference information of a first plurality of secondary users for a first frequency, where the first interference information includes at least interference power of a first secondary user and interference power of a second secondary user to a first protection point; and based on a first interference threshold of the first protection point and the first interference information, performing control to make the first secondary user stop use of the first frequency and make the second secondary user continue use of the first frequency during activation of an associated dynamic protection area, such that aggregate interference of the first plurality of secondary users to the first protection point is below the first interference threshold.

The second aspect of the present disclosure further relates to an electronic device for implementing the method for blockchain, and the electronic device includes a processing circuit to perform corresponding operations.

A third aspect of the present disclosure relates to a method for a SAS, including: receiving a first heartbeat request message from a first secondary user, the first heartbeat request message including a remove list used for a first frequency of a specific dynamic protection area; and sending a first heartbeat response message to the first secondary user, where in response to activation of the specific dynamic protection area and the remove list including the first secondary user, the first heartbeat response message indicates the first secondary user to stop use of the first frequency.

The third aspect of the present disclosure further relates to an electronic device for implementing the method for the SAS, and the electronic device includes a processing circuit to perform corresponding operations.

A fourth aspect of the present disclosure relates to a computer-readable storage medium, where executable instructions are stored therein, and when the executable instructions are executed by one or more processors, operations of the method according to various embodiments in the present disclosure are implemented.

A fifth aspect of the present disclosure relates to a computer program product, where the computer program product includes instructions, and when the instructions are executed by a computer, the method according to various embodiments in the present disclosure is implemented.

The above summary is provided to summarize some exemplary embodiments in order to provide a basic understanding of the various aspects of the subject matter described herein. Therefore, the above-described features are merely examples and should not be construed as limiting the scope or spirit of the subject matter described herein in any way. Other features, aspects, and advantages of the subject matter described herein will become apparent from the Detailed Description described below in conjunction with the drawings.

### BRIEF DESCRIPTION OF DRAWINGS

A better understanding of the present disclosure can be achieved by referring to the detailed description given hereinafter in connection with the accompanying drawings. The same or similar reference numerals are used in the accompanying drawings to denote the same or similar components. The accompanying drawings together with the following detailed description are included in the specification and form a part of the specification, and are used to exemplify the embodiments of the present disclosure and explain the principles and advantages of the present disclosure. In the accompanying drawings:
FIG. 1 illustrates an example scenario for dynamic spectrum sharing according to an embodiment of the present disclosure.
FIG. 2 illustrates an example method for controlling aggregate interference according to an embodiment of the present disclosure.
FIG. 3 illustrates an example processing for selecting or removing a secondary user to control aggregate interference according to an embodiment of the present disclosure.
FIG. 4A illustrates an example electronic device which can implement a secondary user according to an embodiment of the present disclosure.
FIG. 4B illustrates an example electronic device which can implement or form blockchain according to an embodiment of the present disclosure.
FIG. 4C illustrates an example electronic device which can implement a SAS according to an embodiment of the present disclosure.
FIG. 5 illustrates an example signaling flow for controlling aggregate interference according to an embodiment of the present disclosure.
FIG. 6A illustrates an example signaling flow for a heartbeat procedure between a secondary user and a SAS.
FIG. 6B illustrates an example signaling flow of transacting spectrum use for a secondary user according to an embodiment of the present disclosure.
FIG. 7 illustrates example information recorded by blockchain according to an embodiment of the present disclosure.
FIG. 8A to FIG. 8C illustrate an example method for communication according to an embodiment of the present disclosure.
FIG. 9 is an example block diagram of a computer which can be configured to operate as a secondary user or as a SAS and forming a blockchain network according to an embodiment of the present disclosure.
FIG. 10 is a block diagram illustrating a first example of a schematic configuration of a gNB which can be configured to apply the technology of the present disclosure.
FIG. 11 is a block diagram illustrating a second example of a schematic configuration of a gNB which can be configured to apply the technology of the present disclosure.

Although the embodiments described in the present disclosure can have various modifications and alternatives, specific embodiments thereof are illustrated as examples in the accompany drawings and described in detail in this specification. It should be understood that the drawings and detailed description thereof are not intended to limit embodiments to the specific forms disclosed, but to cover all modifications, equivalents, and alternatives falling within the spirit and scope of the claims.

### DESCRIPTION OF EMBODIMENTS

The following describes representative applications of various aspects of the device and method according to the present disclosure. The description of these examples is merely to add context and help to understand the described embodiments. Therefore, it is clear to those skilled in the art that the embodiments described below can be implemented without some or all of the specific details. In other instances, well-known process steps have not been described in detail to avoid unnecessarily obscuring the described embodiments. Other applications are also possible, and the solution of the present disclosure is not limited to these examples.

Generally, all terms used herein will be interpreted in accordance with their ordinary meaning in the related art, unless different meanings and/or implications are clearly given in the context. Unless otherwise expressly stated, references to elements, apparatuses, components, units, and operations are intended to be interpreted openly as at least one instance of the elements, the apparatuses, the components, the units, and the operations. Operations of any method disclosed herein need not be performed in the exact order disclosed unless the operations are explicitly or implicitly described after or before another operation. Any feature of any embodiment disclosed herein can be applied to any other suitable embodiment. Similarly, any advantage of any embodiment can be applied to any other embodiment, and vice versa. Other objects, features, and advantages of the embodiments will become apparent from the following descriptions.

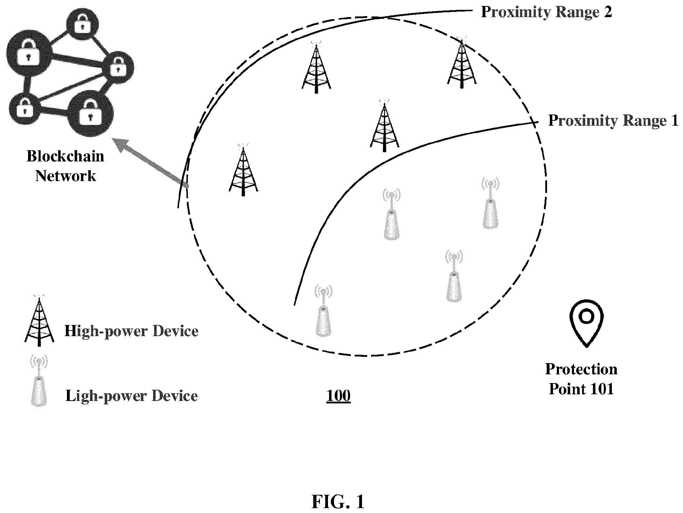

FIG. 1 illustrates an example scenario for dynamic spectrum sharing according to an embodiment of the present disclosure. FIG. 1 illustrates a communication system including a primary user and a plurality of secondary users. The plurality of secondary users can share a spectrum of the primary user, provided that no excessive aggregate interference is caused to the primary user in operation. In the present disclosure, the spectrum can refer to any frequencies, frequency bands, or channels that can be used for wireless communication in the radio spectrum. Without prejudice to understanding, the terms frequency, frequency band, and channel can be used interchangeably below.

In the present disclosure, the primary user can be a device used in a primary system, such as a radar. Secondary users can include Citizens Broadband Radio Service Devices (CBSDs). A CBSD is a device for communication in the citizen broadband radio service (CBRS) band and needs to obtain authorization from a SAS to use the CBRS band. In the embodiments of the present disclosure, a base station in a mobile communication system or a cellular communication system can operate as a CBSD to share frequency resources with the primary system.

In FIG. 1, the primary user is shown as a single protection point 101, and the primary user or the protection point can, for example, correspond to an existing radar. The plurality of secondary users can include one or more high-power devices and one or more low-power devices based on a transmit power value (for example, the maximum transmit power value). It should be understood that the number of primary and secondary users herein is merely an example, which is not limited in the present disclosure.

In FIG. 1, a dynamic protection area (DPA) can be formed around the protection point 101. The DPA can have two states: activated and deactivated. The activated DPA needs to be protected, so that a protection point within the DPA is protected from excessive interference from a secondary user, and the deactivated DPA does not need such protection. A range of the DPA can be determined based on a distance from the protection point. For a high-power device, the range of the DPA is larger, and for a low-power device, the range of the DPA is smaller. In some embodiments, a DPA needs to be defined based on a geographic area to be protected and the maximum allowable aggregate interference level. The geographical area to be protected can be described as coordinates of a polygon for defining the DPA boundary. Such polygons can be predefined and fixed in position. The maximum allowable aggregate interference level can correspond to a specific reliability, for example, 95%. The reliability is defined as a probability that aggregate interferences from secondary users to any protection point within the DPA remains below the maximum allowable aggregate interference level. The DPA defines a proximity range with a distance from a protection point (for example, 101) within the DPA being less than a specific distance such that aggregate interference from secondary users in the proximity range is below the maximum allowable aggregate interference level. A distance for a low-power device is, for example, 150 km, which corresponds to a proximity range 1 in FIG. 1. A distance for a high-power device is, for example, 300 km, which corresponds to a proximity range 2 in FIG. 1.

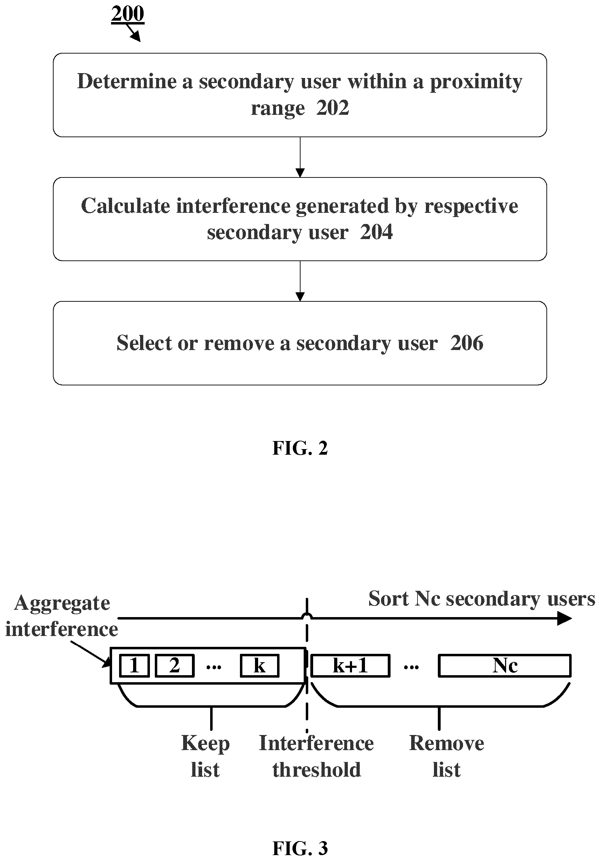

FIG. 2 illustrates an example method for controlling aggregate interference according to an embodiment of the present disclosure. According to an example method 200, for a specific protection point using a specific channel within a DPA, aggregate interference of a plurality of secondary users using a same channel can be made lower than an interference threshold for the specific protection point. The method 200 is described below with reference to the example of the protection point 101 and a first channel.

As shown in FIG. 2, the method 200 includes determining one or more secondary users using the first channel within a proximity range of the protection point 101 (block 202). The proximity range relates to a device type of each secondary user. A low-power device can correspond to the proximity range 1 shown in FIG. 1, and a high-power device can correspond to the proximity range 2 shown in FIG. 1. The determined secondary users include both high-power and low-power secondary users within the proximity range 1 and high-power secondary users within the proximity range 2 but not within the proximity range 1. In other words, the determined secondary users include the low-power secondary users within the proximity range 1 and the high-power secondary users within the proximity range 2.

As shown in FIG. 2, the method 200 further includes, for the determined secondary users, calculating interference generated by a corresponding secondary user using the first channel to the protection point 101 (block 204). For example, an interference power to the protection point 101 can be calculated as In1 = P1 + G1 - L1 based on a transmission parameter and gain performance of a first secondary user, where P1 indicates a transmit power of the first secondary user, G1 indicates an antenna gain in a direction from the first secondary user to the protection point 101, and L1 indicates a path loss from the first secondary user to the protection point 101. For example, the path loss L1 can be determined based on a median path loss of an ITM model, or the path loss L1 can be estimated based on any other suitable propagation model. Then, interference generated by each of the plurality of secondary users is superimposed to form aggregate interference of the plurality of secondary users to the protection point 101.

As shown in FIG. 2, the method 200 further includes selecting a specific quantity of secondary users from the plurality of secondary users so that aggregate interference from such quantity of the secondary users is lower than an interference threshold preset for the protection point 101. In this way, the aggregate interference generated by the selected secondary users using the first channel to the protection point 101 does not affect normal operation of the protection point 101. Alternatively or additionally, the method 200 includes removing a specific quantity of secondary users from the plurality of secondary users so that the aggregate interference from remaining secondary users is below a preset interference threshold for the protection point 101. Similarly, the aggregate interference generated by the remaining secondary users using the first channel to the protection point 101 does not affect normal operation of the protection point 101. It should be noted that, based on characteristics of the protection point, interference thresholds preset for different protection points can be the same or different, and interference thresholds preset for different channels of a same protection point can be the same or different, which is not limited in the present disclosure.

FIG. 3 illustrates an example processing for selecting or removing a secondary user to control the aggregate interference according to an embodiment of the present disclosure. This example processing can be performed for a specific protection point using a specific channel within the DPA. The processing is still described below with reference to the example of the protection point 101 and the first channel.

It is assumed that it has been determined that there are Nc secondary users in the proximity range of the protection point 101, and an interference power from each secondary user to the protection point 101 on the first channel is calculated. As shown in FIG. 3, Nc secondary users can be sorted based on a specific criterion, and interference power of a portion of secondary users can be superimposed sequentially, so that an aggregate interference power of k secondary users is lower than an interference threshold for the protection point 101. In order to enable more secondary users to share the first channel, the aggregate interference power can be made as close as possible to, but not exceeding, the interference threshold for the protection point 101. In some embodiments, the portion of secondary users can be included in a keep list. In some embodiments, remaining secondary users of the Nc secondary users can be included in a remove list. The keep list and/or remove list can be shared between different entities in the present disclosure.

In some embodiments, sorting based on a specific criterion can include sorting the Nc secondary users in ascending order of interferences of the secondary users to the protection point 101. Secondary users with less interference can be included in the keep list. This enables as many secondary users as possible to share the first channel while the specific interference threshold is met.

In some embodiments, sorting based on a specific criterion can include sorting the Nc secondary users in descending order of communication requirements of the secondary users. Secondary users with higher communication requirements can be included in the keep list. This enables preferential sharing of the first channel by the secondary users with higher communication requirements while the specific interference threshold is met.

In some embodiments, sorting based on a specific criterion can include sorting the Nc secondary users based on a weighted order of interferences from the secondary users and corresponding communication requirements. For example, the Nc secondary users can be sorted in a weighted ascending order of interferences of the secondary users and corresponding communication requirements, or can be sorted in a weighted descending order of reciprocals of interferences of the secondary users and corresponding communication requirements. **In** this way, a balance can be achieved between the number of secondary users sharing the channel and the communication requirements.

For sorting in the above examples, based on consideration of the communication requirements, spectrum usage requirements and communication quality of service of the secondary system can be better satisfied while the primary system can be protected from excessive interference.

Referring to the example methods and operations of FIGs. 2 and 3, it can be understood that controlling the aggregate interference involves a large number of computing tasks. According to some implementations, the operations of determining the secondary users within the proximity range, calculating the interference of the secondary users, and selecting or removing the secondary users (that is, all the operations 202 to 206) can be performed by the SAS alone. A large number of computing tasks impose a processing capability burden on the SAS, and it is inefficient to perform these operations by the SAS alone. **In** embodiments of the present disclosure, these operations can be distributed among the SAS, secondary users, and a blockchain network consisting of secondary users. This reduces the processing capability burden of the SAS and improves computing efficiency.

### Examples of electronic devices

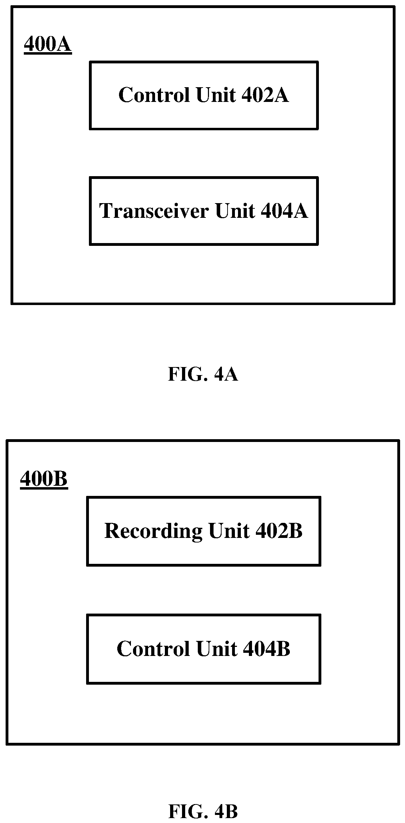

Example electronic devices which are configured to implement entities according to the embodiments of the present disclosure are described below with reference to FIGs. 4A to 4C.

FIG. 4A illustrates an example electronic device which can be configured to implement a secondary user according to an embodiment of the present disclosure. The electronic device 400A can include various units to implement various embodiments of dynamic spectrum sharing and aggregate interference control according to the present disclosure. **In** the example of FIG. 4A, the electronic device 400A includes a control unit 402A and a transceiver unit 404A. The various operations described below with reference to the secondary users or the secondary system can be implemented by the units 402A to 404A or other possible units of the electronic device 400A.

In some embodiments, the transceiver unit 404A can be configured to receive an authorization response message from a SAS, where the authorization response message includes information of one or more protection points.

In some embodiments, the control unit 402A can be configured to determine an interference power of the electronic device 400A or a corresponding secondary user to a first protection point in the one or more protection points at a first frequency at which the first protection point operates, based at least on transmission parameters of the electronic device 400A or the corresponding secondary user, a location of the first protection point and the first frequency.

In some embodiments, the transceiver unit 404A can be configured to record an interference threshold requirement of the first protection point and interference information into a blockchain network. The interference information includes an interference power of the electronic device 400A or the corresponding secondary user to the first protection point, to be used by the blockchain network to control aggregate interference of one or more secondary users to the first protection point. The transceiver unit 404A can be further configured to control or perform operations related to transmission and reception of signaling or messages.

In embodiments, the electronic device 400A can be implemented at the chip level, or can be implemented at the device level by including other external components (such as wired or wireless links). For example, the electronic device 400A can work as a communication device as a whole machine.

In some embodiments, the electronic device 400A can obtain (for example, through the transceiver unit 404 A), from the blockchain network, a remove list for controlling use of the first frequency. Based on the remove list including the first secondary user, the electronic device 400A can send a transaction request message to a second secondary user, suggesting to the second secondary user transfer, to the first secondary user, of use of the first frequency during activation of the associated dynamic protection area. In a case that the second secondary user approves the transfer, the electronic device 400A can receive a transaction approval message from the second secondary user and record the transaction request message into the blockchain network, to be used by the blockchain network to update the remove list.

In some embodiments, based on the remove list not including the first secondary user, the electronic device 400A can receive a transaction request message from a second secondary user, where the transaction request message suggests to the first secondary user transfer, to the second secondary user, of use of the first frequency during activation of the associated dynamic protection area. The electronic device 400A can approve or reject the transfer based on its own use status of the first frequency and a consideration or reward suggested by the second secondary user. In a case that the transfer is approved, the electronic device 400A can send a transaction approval message to the second secondary user and record the transaction approval message into the blockchain network, to be used by the blockchain network to update the remove list.

FIG. 4B illustrates an example electronic device which can be configured to implement a blockchain according to an embodiment of the present disclosure. The electronic device 400B can include various units to implement various embodiments of dynamic spectrum sharing and aggregate interference control according to the present disclosure. In the example of FIG. 4B, the electronic device 400B includes a recording unit 402B and a control unit 404B. Operations described in this specification in conjunction with the blockchain can be implemented by the units 402B to 404B of the electronic device 400B or other possible units.

In some embodiments, the recording unit 402B can be configured to record first interference information of a first plurality of secondary users for a first frequency. The first interference information includes at least interference power of a first secondary user and interference power of a second secondary user to a first protection point.

In some embodiments, the control unit 404B can be configured to, based on a first interference threshold of the first protection point and the first interference information, perform control to make the first secondary user stop use of the first frequency and make the second secondary user continue use of the first frequency during activation of an associated dynamic protection area, such that the aggregate interference of the first plurality of secondary users to the first protection point is below a first interference threshold. For example, the control can include forming control information (for example, a remove list and/or a keep list) by calculating aggregate interference from a plurality of secondary users.

**In** embodiments, the electronic device 400B can be implemented at the chip level, or can be implemented at the device level by including other external components (such as radio links or antennas). For example, the electronic device 400B can work as a communication device as a whole machine.

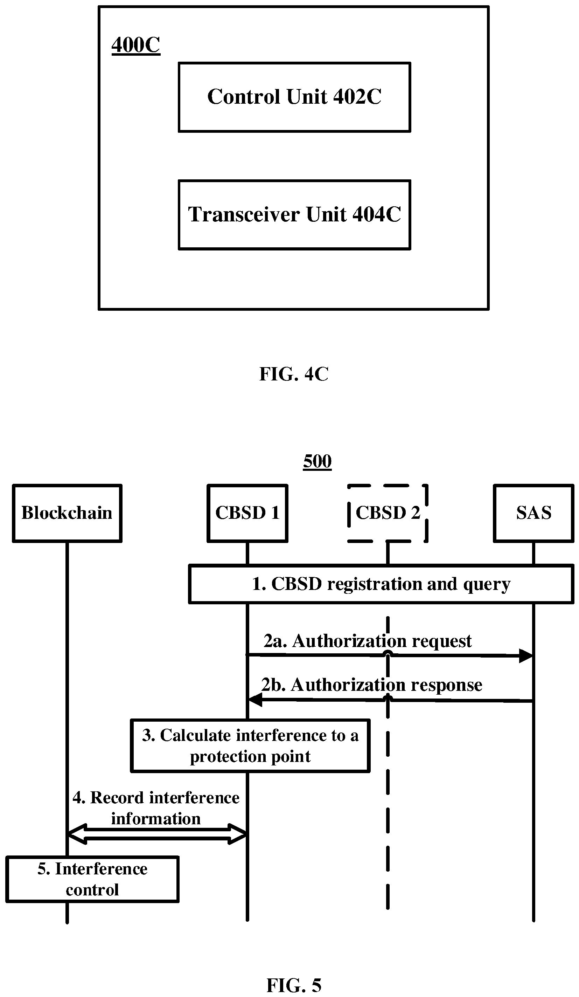

FIG. 4C illustrates an example electronic device which can be configured to implement a SAS according to an embodiment of the present disclosure. The electronic device 400C can include various units to implement various embodiments of dynamic spectrum sharing and aggregate interference control according to the present disclosure. **In** the example in FIG. 4C, the electronic device 400C includes a control unit 402C and a transceiver unit 404C. Operations described in this specification in conjunction with the SAS can be implemented by the units 402C to 404C of the electronic device 400C or other possible units.

**In** some embodiments, the transceiver unit 404C can be configured to receive a first heartbeat request message from a first secondary user, the first heartbeat request message including a remove list used for a first frequency of a specific dynamic protection area. The transceiver unit 404C can be further configured to send a first heartbeat response message to the first secondary user. The transceiver unit 404C can be further configured to control or perform operations related to transmission and reception of signaling or messages.

**In** some embodiments, the control unit 402C can be configured to indicate the first secondary user through the first heartbeat response message to stop use of the first frequency, in response to activation of the specific dynamic protection area and the remove list including the first secondary user.

**In** embodiments, the electronic device 400C can be implemented at the chip level, or can be implemented at the device level by including other external components (such as radio links or antennas). For example, the electronic device 400C can work as a communication device as a whole machine.

It should be understood that the above various units are only logical modules divided based on logical functions to be implemented by the units, and are not intended to limit specific implementations, for example, the units can be implemented by software, hardware, or a combination of software and hardware. In actual implementation, the above various units can be implemented as independent physical entities, or can be implemented by a single entity (for example, a processor (CPU, DSP, or the like), or an integrated circuit). The processing circuitry can refer to various implementations of a digital circuitry, an analog circuitry, or a mixed signal (combination of analog and digital) circuitry that perform functions in a computing system. The processing circuitry can include, for example, a circuit such as an integrated circuit (IC), an application specific integrated circuit (ASIC), a portion or circuit of a separate processor core, the entire processor core, a separate processor, a programmable hardware device such as a field programmable gate array (FPGA), and/or a system including multiple processors.

FIG. 5 illustrates an example signaling flow for controlling aggregate interference according to an embodiment of the present disclosure. In the signaling flow 500, a plurality of operations for controlling aggregate interference are distributed among a plurality of entities, such as a SAS, secondary users, and a blockchain network, such that a single entity performs less computation or processing. This reduces the processing capability burden of a single entity and can improve computing efficiency. The signaling flow 500 can be performed, for example, between the electronic devices 400A, 400B, and 400C. The signaling flow 500 is described below with reference to an example where a CBSD serves as a secondary user.

As shown in FIG. 5, at operation 1, the CBSD 1 initiates a registration and spectrum query procedure to the SAS to obtain available spectrum resources.

At operation 2a, after obtaining the available spectrum resources, the CBSD 1 sends an authorization request message to the SAS. In some embodiments, the authorization request message can include operational parameters of the CBSD 1 such as a transmit power (for example, a maximum transmit power) and a frequency range desired to be used. For example, the maximum transmit power can be represented by a maximum equivalent isotropic radiated power (EIRP). The authorization request message can further include its own identification information (such as cbsdID), a measurement report (measReport), and the like. Accordingly, the SAS can determine information such as a location of the CBSD 1 based on searching an identification information in a database. Alternatively, the authorization request message can explicitly include location information of the CBSD 1.

At operation 2b, upon receiving the authorization request message from the CBSD 1, the SAS processes the message and sends an authorization response message to the CBSD 1. In some embodiments, the SAS can obtain identification information and operational parameters of the CBSD 1 by processing the authorization request message, so as to obtain information such as a frequency range desired to use, a location, and a device type for the CBSD 1. For example, the SAS can determine it as a low-power or high-power device type based on the EIRP of the CBSD 1.

In some embodiments, based on the frequency range desired to use for the CBSD 1, he SAS can determine one or more protection points operating in the frequency range within the DPA and a corresponding interference threshold. Accordingly, the authorization response message can include protection point information and can specifically include corresponding locations and interference thresholds for the protection points. The authorization response message can further include a frequency range for operation by a corresponding protection point. According to different implementations, the frequency range can correspond to one or more frequency bands or channels. In a case that the frequency range is identical to the frequency range desired to use for the CBSD 1, the authorization response message can exclude the frequency range for operation by the corresponding protection point. It can be understood that a constraint condition for a specific protection point p and a channel ch for operation can be formed by an interference threshold, which is denoted as c=<p, ch>.

In an embodiment, based on a device type of the CBSD 1 and a proximity range of the protection point, the SAS can further determine whether to include information of the protection point in the authorization response message. Using the protection point 101 in FIG. 1 as an example, if the CBSD 1 is a high-power device and is outside the proximity area 2 shown in FIG. 1, or if the CBSD 1 is a low-power device and is outside the proximity area 1 shown in FIG. 1, the information of the protection point can be excluded in the authorization response message.

At operation 3, after receiving the authorization response message from the SAS, the CBSD 1 can process the message and calculate interference to a corresponding protection point. In some embodiments, by processing the authorization response message, the CBSD 1 can obtain information of one or more protection points operating in a same or overlapping frequency range. For example, the CBSD 1 can obtain respective locations and interference thresholds of the protection points.

Specifically, the CBSD 1 can determine a distance between the CBSD 1 and a specific protection point and a corresponding path loss L1 based on a location of the CBSD 1 and a location of the specific protection point. Then, the CBSD 1 can calculate an interference power to the protection point as In1 = P1 + G1 - L1 based on a transmission parameter and gain performance of the CBSD 1. P1 indicates a transmit power of the CBSD 1, and G1 indicates an antenna gain in a direction from the CBSD 1 to the protection point. For example, the path loss L1 can be determined based on a median path loss of an ITM model, or the path loss L1 can be estimated based on any other suitable propagation model. Accordingly, the interference power can be calculated as a deterministic result rather than a non-deterministic result expressed by a specific probability distribution, or an interference value range expressed by upper and lower limits.

At operation 4, the CBSD 1 can record a calculated interference to a specific protection point and an interference threshold for the protection point into the blockchain. It should be understood that for each protection point operating in the same or overlapping frequency range, the CBSD 1 can calculate interference to each protection point through operation 3 and operation 4, and record the interference and the interference threshold of the corresponding protection point into the blockchain.

The above describes only the operation of calculating interference to one or more protection points by a single CBSD 1 within a specific frequency range. It should be understood that other CBSDs such as a CBSD 2 can further perform similar operations to implement dynamical spectrum sharing and control aggregate interference to protection points. Similarly, these CBSDs can calculate interference to one or more protection points and record the interference and the interference threshold of the corresponding protection point into the blockchain. It should be understood that frequency ranges and protection points considered by different CBSDs during interference calculation can overlap or can be completely different.

Through operation 3, complex processing of calculating interference of a plurality of secondary users to a plurality of protection points in a frequency range (for example, including one or more channels) can be divided into simpler processing of calculating interference of a single secondary user to a plurality of protection points in the frequency range, and simpler processing is then distributed to each secondary user itself. This greatly reduces a burden of performing the complex processing by a single SAS and can improve computing efficiency.

Through the operation 3 and operation 4, a deterministic interference power calculated by each secondary user can be recorded into the blockchain to obtain a deterministic aggregate interference.

At operation 5, the blockchain network can calculate a corresponding aggregate interference for each frequency or channel of each protection point based on a recorded interference values of each CBSD for a plurality of protection points within a frequency range (for example, including one or more channels) and perform aggregate interference control based on a corresponding interference threshold requirement (which corresponds to the above constraint c=<p, ch>). Because the calculated interference value for each CBSD is deterministic, the calculated aggregate interference herein is also deterministic.

In some embodiments, for a specific protection point using a specific channel, a specific quantity of CBSDs can be selected from a plurality of CBSDs to be included in a keep list such that an aggregate interference formed by CBSDs of the specific quantity is lower than an interference threshold for the protection point; or a specific quantity of CBSDs can be removed from the plurality of CBSDs to be included in a remove list such that an aggregate interference formed by remaining CBSDs is lower than a interference threshold for the protection point. Because the aggregate interference obtained through operation 5 is deterministic, the number of CBSDs and members contained in the keep list or remove list are deterministic. Such deterministic feature enables various entities to obtain a consistent keep or remove list under operating conditions. It is easy to understand that in a case that the aggregate interference value is not deterministic, for example, being in a form of a probability distribution or in an interference value range represented by upper and lower limits, this usually can cause unexpected changes in the keep list or remove list. In this way, it is difficult for entities to obtain a consistent keep list or remove list, affecting spectrum sharing and use and even affecting the operation of the primary system due to an excessively small remove list.

Through operation 5, the processing of calculating the aggregate interference and forming the control information (for example, the remove list and/or the keep list) can be allocated to the blockchain network for execution. This further reduces a burden of calculation performed by the SAS and can improve the calculation efficiency.

In some embodiments, in a case that the use of the first channel or frequency by the CBSD 1 exposes a specific protection point to excessive interference, the CBSD 1 can switch to use other supported channels or frequencies such that the CBSD 1 can continue to provide services and avoid service interruptions. Therefore, the CBSD 1 can send an authorization request to the SAS at an initial stage or when channel switching is required. A frequency desired to use included in the authorization request can be a frequency initially used by the CBSD 1 or a frequency desired to switch to.

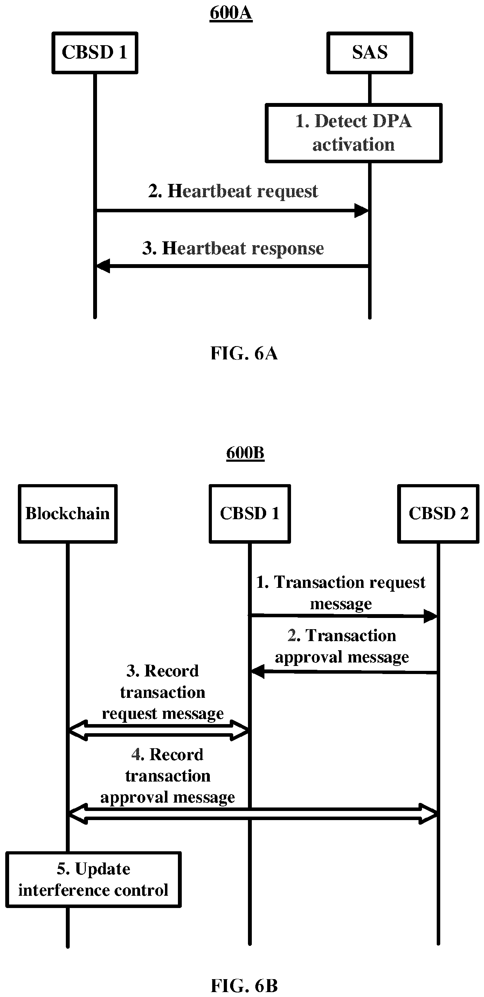

FIG. 6A illustrates an example signaling flow for a heartbeat procedure between a secondary user and a SAS. The signaling flow 600A can be performed, for example, between the electronic devices 400A and 400C. The signaling flow 600A is still described with reference to an example that a CBSD serves as a secondary user.

As shown in FIG. 6A, at operation 1, the SAS detects DPA activation. For example, the SAS can receive sensing information of an environmental sensing capability (ESC) and detect based on the sensing information that a protection point (for example, 101) of a specific primary system uses a specific channel (for example, a first channel) and that a corresponding DPA is activated. In a case that the CBSD 1 is included in a remove list of the protection point 101 and the first channel, the SAS can perform a heartbeat procedure with the CBSD 1 to stop transmission of the CBSD 1 through the first channel.

At operation 2, the SAS receives a heartbeat request message from the CBSD 1, where the heartbeat request message can include a corresponding remove list for one or more channels or frequencies of one or more DPAs (block 802A). For example, initially, the heartbeat request message can include all remove lists and/or keep lists formed through the blockchain network, the heartbeat request message thereafter can include only one or more remove lists and/or keep lists updated through the blockchain network. In this way, although the SAS itself does not form a remove list and/or a keep list, the SAS can obtain a latest remove list and/or keep list and control spectrum sharing based on the remove list and/or keep list.

At operation 3, the SAS sends a heartbeat response message to the CBSD 1. In response to the protection point 101 using the first channel, the corresponding DPA being activated, and the corresponding remove list containing the CBSD 1, the heartbeat response message can indicate the CBSD 1 to stop using the first channel or the corresponding frequency.

Similarly, a heartbeat procedure can be performed between other CBSDs and the SAS, and the SAS can control, through a heartbeat response message, use of a specific channel or frequency for one or more CBSDs.

In the example of FIG. 6A, the CBSD 1 can be performing an emergency service when the DPA is activated. The CBSD 1 can switch to use other supported channels or frequencies to continuously provide services through, for example, the signaling flow shown in FIG. 5. In some embodiments, alternatively, the CBSD 1 can transact the use of the first channel or the corresponding frequency with other CBSDs (for example, a CBSD in the corresponding keep list).

FIG. 6B illustrates an example signaling flow of transacting spectrum use for a secondary user according to an embodiment of the present disclosure. The signaling flow 600B can be performed, for example, between the electronic devices 400A and 400B. The signaling flow 600B is still described below with reference to an example that a CBSD serves as a secondary user.

As shown in FIG. 6B, at operation 1, the CBSD 1 sends a transaction request message to the CBSD 2. The transaction request message suggests to the CBSD 2 transfer, to the CBSD 1, use of the first channel when, for example, the protection point 1 uses the first channel or the associated DPA is activated. In some embodiments, the transaction request message can further include consideration or compensation for the transaction. In some embodiments, the CBSD 1 can send the transaction request message to the CBSD 2 based on that an interference value generated by the CBSD 2 is greater than or equal to an interference value of the CBSD 1.

At operation 2, the CBSD 2 can send a transaction approval message to the CBSD 1 to indicate approval of the suggested transfer. For example, the CBSD 2 can approve the transaction if the first channel is idle, the current service is not urgent, or the consideration is attractive.

At operations 3 and 4, the CBSD 1 and CBSD 2 record the transaction request message and the transaction approval message into the blockchain network, respectively, to be used by the blockchain network to update the remove list and/or the keep list. **In** some embodiments, the transaction request message and transaction approval message in operations 1 and 2 are sent through the blockchain network such that the blockchain network can obtain the corresponding transaction request message and transaction approval message. **In** this way, the blockchain network can record the transaction request message and the transaction approval message in response to the transfer approval of the CBSD 2.

At operation 5, based on the transaction request message and the transaction approval message, the blockchain network can delete the CBSD 1 from the remove list and include the CBSD 2 in the remove list. Additionally or alternatively, the blockchain network can remove the CBSD 2 from the keep list and include the CBSD 1 into the keep list.

It should be noted that although FIG. 6B illustrates only a transaction operation between the CBSD 1 and the CBSD 2, in some embodiments, the CBSD 1 can execute a transaction with a plurality of CBSDs based on that the interference value generated by the CBSD 1 is greater than the interference value of the single CBSD and less than or equal to the interference value of the plurality of CBSDs.

It can be seen that the signaling flow of FIG. 6B only involves processing between CBSDs based on the current remove list or keep list, and list updating after transaction by the blockchain network. **In** contrast, in a case that the CBSD 1 requests to switch a channel, the CBSD 1 needs to recalculate the interference information and the blockchain needs to re-form a remove list or keep list, as described with reference to FIG. 5. It can be seen that the transaction is more efficient for the use of the first channel or the corresponding frequency.

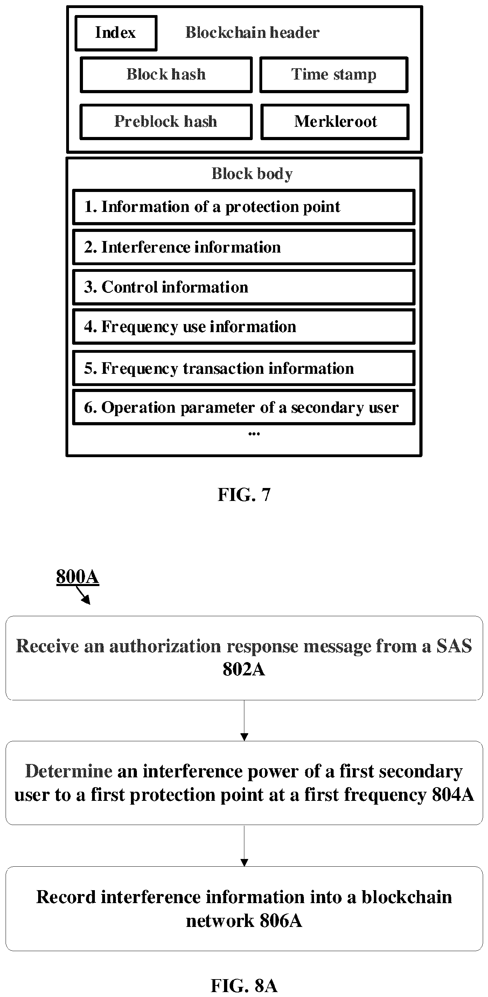

FIG. 7 illustrates example information recorded by blockchain according to an embodiment of the present disclosure. According to different implementations, more or less pieces of information than the example information can be recorded in the blockchain. The example information related to dynamic spectrum sharing or aggregate interference control is briefly described below.
- protection point information, such as a location of a protection point, one or more operating frequencies (channels), and an interference threshold corresponding to one or more operating frequencies;
- interference information: an individual interference power value from each interference source at each operating frequency for each protection point;
- control information: a remove list and/or keep list for each operating frequency of each protection point, and aggregate interference power corresponding to the remove list and/or keep list;
- frequency use information: a frequency use record of each secondary user;
- frequency transaction information: a record of transaction frequency use between secondary users; and
- operating parameter of a secondary user: a transmit power of each secondary user and a frequency desired to use.

In the present disclosure, the blockchain is used as a source for recording information related to dynamic spectrum sharing or aggregate interference control, which facilitates entities to obtain consistent information. Information can be updated on the blockchain as the related information changes (for example, during transaction of spectrum use).

### Example method

FIG. 8A illustrates a first example method for communication according to an embodiment of the present disclosure. The method can be performed by the electronic device 400A or a corresponding secondary user (for example, a first secondary user or a CBSD 1). As shown in FIG. 8A, the method 800A can include receiving an authorization response message from a SAS by a first secondary user, where the authorization response message includes information of one or more protection points (block 802A). The method can further include determining an interference power of the first secondary user to a first protection point in the one or more protection points at a first frequency at which the first protection point operates, based at least on transmission parameters of the first secondary user, a location of the first protection point and the first frequency (block 804A). The method can further include recording, by the first secondary user, an interference threshold requirement of the first protection point and interference information into a blockchain network, where the interference information includes an interference power of the first secondary user to the first protection point, to be used by the blockchain network to control aggregate interference of one or more secondary users to the first protection point (block 806A). Further details of the method can be understood with reference to the description above with respect to the electronic device 400A or the secondary user.

In some embodiments, the method can include transmitting an authorization request message to the SAS, the authorization request message including a maximum transmit power and a desired frequency to use for the first secondary user. The desired frequency to use is a frequency initially used by the first secondary user or a frequency to which the first secondary user desires to switch.

In some embodiments, the method can include obtaining control information from the blockchain network that controls use of the first frequency; and based on the control information, continuing use of the first frequency, or stopping use of the first frequency when an associated dynamic protection area is activated.

In some embodiments, the control information includes at least one of the following: a remove list containing secondary users needing to stop use of the first frequency when the associated dynamic protection area is activated; or a keep list containing secondary users allowed to continue use of the first frequency when the associated dynamic protection area is activated.

In some embodiments, the method can include determining, via heartbeat exchange with the SAS, that the associated dynamic protection area is activated; and stopping use of the first frequency based on that the first secondary user is contained in the remove list.

In some embodiments, the method can include sending a transaction request message to a second secondary user, the transaction request message suggesting to the second secondary user transfer, to the first secondary user, of use of the first frequency during activation of the associated dynamic protection area; receiving a transaction approval message from the second secondary user, the transaction approval message approving the transfer; and recording the transaction request message into the blockchain network, to be used by the blockchain network to update the remove list and/or the keep list.

In some embodiments, the method can include receiving a transaction request message from a second secondary user, the transaction request message suggesting to the first secondary user transfer, to the second secondary user, of use of the first frequency during activation of the associated dynamic protection area; sending a transaction approval message to the second secondary user, the transaction approval message approving the transfer; and recording the transaction approval message into the blockchain network, to be used by the blockchain network to update the remove list and/or the keep list.

In some embodiments, the method can include obtaining control information that controls use of the first frequency from the blockchain network periodically or upon update of the control information; and providing the control information to the SAS via a heartbeat request message.

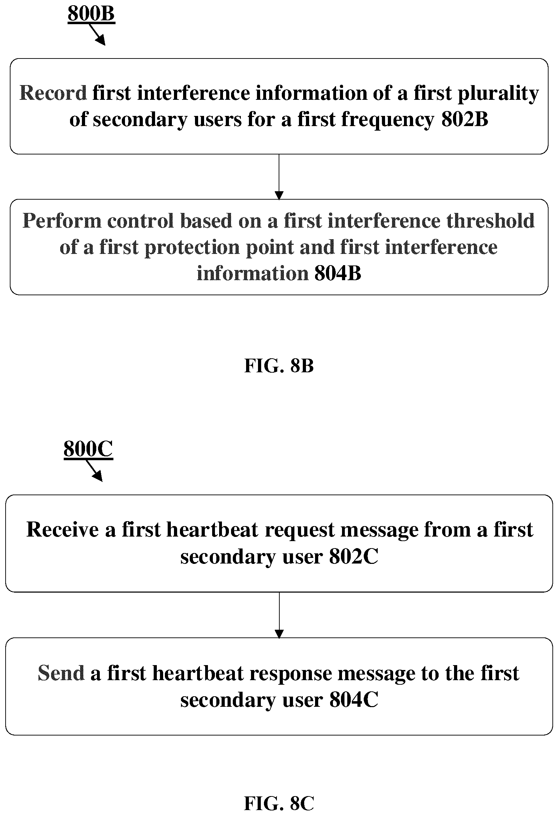

FIG. 8B illustrates a second example method for communication according to an embodiment of the present disclosure. The method can be performed by an electronic device 400B or a blockchain network. As shown in FIG. 8B, the method 800B can include recording first interference information of a first plurality of secondary users for a first frequency, where the first interference information includes at least interference power of a first secondary user and interference power of a second secondary user to a first protection point (block 802B). The method can further include, based on a first interference threshold of the first protection point and the first interference information, performing control to make the first secondary user stop use of the first frequency and make the second secondary user continue use of the first frequency during activation of an associated dynamic protection area, such that aggregate interference of the first plurality of secondary users to the first protection point is below the first interference threshold (block 804B). Further details of the method can be understood with reference to the description above with respect to the electronic device 400B or the blockchain network.

In some embodiments, the method can include recording second interference information of a second plurality of secondary users for a second frequency, where the second interference information includes at least interference power of a third secondary user and interference power of a fourth secondary user to a second protection point; and based on a second interference threshold of the second protection point and the second interference information, performing control to make the third secondary user stop use of the second frequency and the fourth secondary user continue use of the second frequency during activation of the associated dynamic protection area, such that aggregate interference of the second plurality of secondary users to the second protection point is below the second interference threshold.

In some embodiments, the first plurality of secondary users and the second plurality of secondary users include one or more secondary users that overlap or are different; and/or the first protection point and the second protection point are the same or different protection points.

In some embodiments, the method can include forming a remove list for the first frequency, the remove list containing secondary users needing to stop use of the first frequency when the associated dynamic protection area is activated; and/or forming a keep list for the first frequency, the keep list containing secondary users allowed to continue use of the first frequency when the associated dynamic protection area is activated.

In some embodiments, forming the remove list for the first frequency includes sorting the first plurality of secondary users based on a specific criterion, and sequentially superimposing interference powers of a portion of the secondary users such that an aggregate interference power does not exceed (for example, just being lower than) the first interference threshold; and including remaining secondary users of the first plurality of secondary users into the remove list.

In some embodiments, sorting based on the specific criterion includes sorting the first plurality of secondary users in ascending order of interferences of the secondary users to the first protection point; sorting the first plurality of secondary users in descending order of communication requirements of the secondary users; or sorting the first plurality of secondary users in a weighted order of interferences of the secondary users to the first protection point and corresponding communication requirements.

In some embodiments, the method can include: recording a transaction request message from the first secondary user, the transaction request message suggesting to the second secondary user transfer, to the first secondary user, of use of the first frequency during activation of the associated dynamic protection area; recording a transaction approval message from the second secondary user, the transaction approval message approving the transfer; and based on the transfer, deleting the first secondary user from the remove list and including the second secondary user into the remove list, and/or deleting the second secondary user from the keep list and including the first secondary user into the keep list.

FIG. 8C illustrates a third example method for communication according to an embodiment of the present disclosure. The method can be performed by the electronic device 400C or the SAS. As shown in FIG. 8C, the method 800C can include receiving a first heartbeat request message from a first secondary user, the first heartbeat request message including a remove list used for a first frequency of a specific dynamic protection area (block 802C). The method can further include sending a first heartbeat response message to the first secondary user, where in response to activation of the specific dynamic protection area and the remove list including the first secondary user, the first heartbeat response message indicates the first secondary user to stop use of the first frequency (block 804C). Further details of the method can be understood with reference to the description above with respect to the electronic device 400C or the SAS.

In some embodiments, the method can include receiving a second heartbeat request message from a second secondary user; and sending a second heartbeat response message to the second secondary user, where in response to activation of the specific dynamic protection area and the remove list including the second secondary user, the second heartbeat response message indicates the second secondary user to stop use of the first frequency.

In some embodiments, the method can include receiving an authorization request message from the first secondary user, where the authorization request message includes a maximum transmit power and a frequency desired to use for the first secondary user; and sending an authorization response message to the first secondary user, where the authorization response message includes information of one or more protection points; where the SAS does not calculate an interference power of the first secondary user to a first protection point at the first frequency.

Various exemplary electronic devices and methods according to embodiments of the present disclosure have been described above. It should be understood that the operations or functions of these electronic devices can be combined with each other to achieve more or less operations or functions than described. The operational steps of the methods can also be combined with each other in any suitable order, so that similarly more or fewer operations are achieved than described.

It should be understood that the machine-executable instructions in the machine-readable storage medium or program product according to the embodiments of the present disclosure can be configured to perform operations corresponding to the device and method embodiments described above. When referring to the above device and method embodiments, the embodiments of the machine-readable storage medium or the program product are clear to those skilled in the art, and therefore description thereof will not be repeated herein. A machine-readable storage media and a program product for carrying or including the above-described machine-executable instructions also fall within the scope of the present disclosure. Such storage medium can include, but is not limited to, a floppy disk, an optical disk, a magneto-optical disk, a memory card, a memory stick, and the like. In addition, it should be understood that the above series of processing and devices can alternatively be implemented by software and/or firmware.

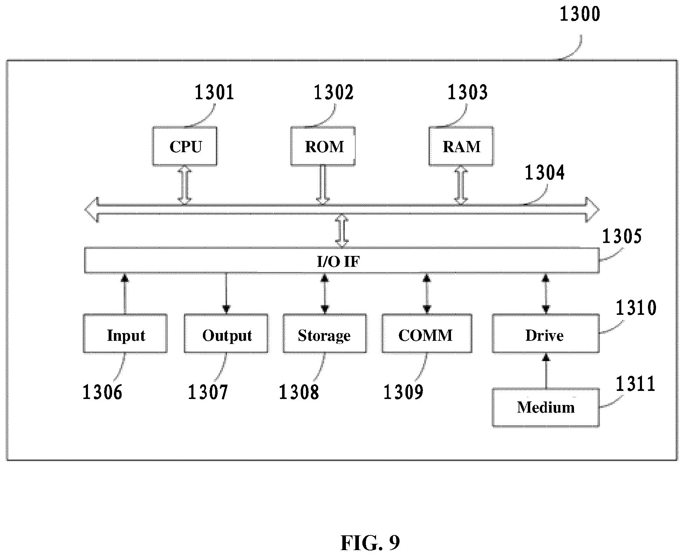

In addition, it should be understood that the above series of processing and devices can alternatively be implemented by software and/or firmware. In the case of implementation by software and/or firmware, a program constituting the software is installed from a storage medium or a network to a computer having a dedicated hardware configuration, such as a general-purpose computer 1300 shown in FIG. 9. When various programs are installed, the computer is capable of performing various functions and so on. FIG. 9 is an example block diagram of a computer which can be configured to operate as a secondary user or as a SAS and forming a blockchain network according to an embodiment of the present disclosure.

In FIG. 9, a central processing unit (CPU) 1301 executes various processing based on a program stored in a read-only memory (ROM) 1302 or a program loaded from a storage portion 1308 to a random access memory (RAM) 1303. The RAM 1303 also stores data required for executing various processing and the like by the CPU 1301 when necessary.

The CPU 1301, the ROM 1302, and the RAM 1303 are connected with each other via a bus 1304. An input/output port 1305 is also connected to the bus 1304.

The following components are connected to the input/output port 1305: an input part 1306, including a keyboard, a mouse, and the like; an output part 1307, including a display such as a cathode-ray tube (CRT) and a liquid crystal display (LCD), a speaker, and the like; a storage part 1308, including a hard disk and the like; and a communication part 1309, including a network interface card such as a LAN card or a modem. The communication part 1309 performs communication processing via a network such as the Internet.

Based on needs, a drive 1310 is also connected to the input/output port 1305. A removable medium 1311 such as a magnetic disk, an optical disc, a magneto-optical disk, a semiconductor memory, or the like is mounted on the drive 1310 when necessary, so that a computer program read therefrom is installed in the storage part 1308 when necessary.

In a case that the foregoing series of processing are implemented by software, programs constituting the software are installed from a network such as the Internet or a storage medium such as the removable medium 1311.

Those skilled in the art should understand that such a storage medium is not limited to the removable medium 1311 shown in FIG. 9, in which the program is stored and distributed independent from a device to provide the program for users. For example, the removable medium 1311 includes a magnetic disk (including a floppy disk (registered trademark)), an optical disc (including a compact disk read-only memory (CD-ROM) and a digital versatile disk (DVD)), a magneto-optical disc (including a mini disk (MD)(registered trademark)), and a semiconductor memory. Alternatively, the storage medium can be the ROM 1302, a hard disk included in the storage part 1308, or the like, in which the program is stored, and can be distributed to users along with a device including the storage medium.

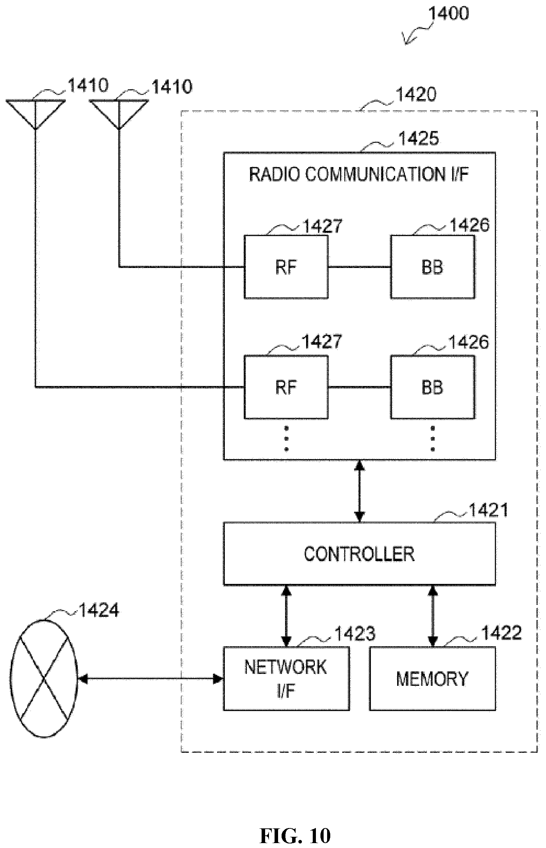

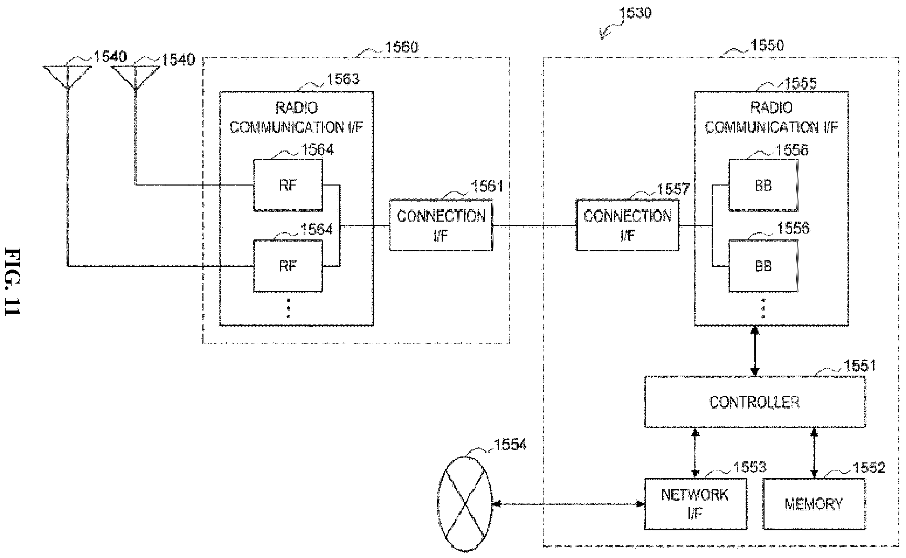

Use cases with a secondary user being implemented a base station according to the present disclosure will be described below with reference to FIGs. 10 and 11. In the present disclosure, the base station can be a 5G NR base station, such as gNB and ng-eNB. The gNB can provide NR user plane and control plane protocols for terminating with the terminal device. The ng-eNB is a node defined for compatibility with the 4G LTE communication system, which can be an upgrade of an evolved NodeB (eNB) of an LTE radio access network, providing an evolved universal terrestrial radio access (E-UTRA) user plane and control plane protocols for terminating with UEs. In addition, examples of the base station can include but are not limited to the following: at least one of a base transceiver station (BTS) and a base station controller (BSC) in a GSM system; at least one of a radio network controller (RNC) and a Node B in a WCDMA system; access points (APs) in WLAN and WiMAX systems; and corresponding network nodes in communication systems to be developed or under development. Part of functions of a base station herein can also be implemented as an entity that has control functions to communication in D2D, M2M, and V2X communication scenarios, or as an entity that plays a role of spectrum coordination in the cognitive radio communication scenario.

### Use cases for base stations

### First use case

FIG. 10 is a block diagram illustrating a first example of a schematic configuration of a gNB to which the technology in content of the present disclosure is applicable. The gNB 1400 includes a plurality of antennas 1410 and a base station device 1420. The base station device 1420 and each antenna 1410 can be connected to each other via an RF cable. In one implementation, the gNB 1400 (or base station device 1420) herein can correspond to the electronic devices 300A described above.

Each of the antennas 1410 includes a single or multiple antenna elements (such as multiple antenna elements included in a multiple input and multiple output (MIMO) antenna), and is used for the base station device 1420 to transmit and receive radio signals. As shown in FIG. 10, the gNB 1400 can include multiple antennas 1410. For example, multiple antennas 1410 can be compatible with multiple frequency bands used by the gNB 1400.

The base station device 1420 includes a controller 1421, a memory 1422, a network interface 1423, and a radio communication interface 1425.

The controller 1421 can be, for example, a CPU or a DSP, and operates various functions of higher layers of the base station device 1420. For example, controller 1421 generates data packets from data in signals processed by the radio communication interface 1425, and transfers the generated packets via the network interface 1423. The controller 1421 can bundle data from multiple baseband processors to generate the bundled packets, and transfer the generated bundled packets. The controller 1421 can have logic functions of performing control such as radio resource control, radio bearer control, mobility management, admission control, and scheduling. This control can be performed in corporation with a gNB or a core network node in the vicinity. The memory 1422 includes a RAM and a ROM, and stores a program that is executed by the controller 1421 and various types of control data (such as a terminal list, transmit power data, and scheduling data).

The network interface 1423 is a communication interface for connecting the base station device 1420 to the core network 1424. The controller 1421 can communicate with a core network node or another gNB via the network interface 1423. In this case, the gNB 1400 and the core network node or other gNBs can be connected to each other through a logical interface (such as an S1 interface and an X2 interface). The network interface 1423 can also be a wired communication interface or a radio communication interface for radio backhaul lines. If the network interface 1423 is a radio communication interface, the network interface 1423 can use a higher frequency band for radio communication than a frequency band used by the radio communication interface 1425.

The radio communication interface 1425 supports any cellular communication schemes (such as Long Term Evolution (LTE) and LTE-Advanced), and provides, via the antenna 1410, radio connection to a terminal located in a cell of the gNB 1400. The radio communication interface 1425 can typically include, for example, a baseband (BB) processor 1426 and a RF circuit 1427. The BB processor 1426 can perform, for example, encoding/decoding, modulation/demodulation, and multiplexing/demultiplexing, and performs various types of signal processing of layers (such as L1, Medium Access Control (MAC), Radio Link Control (RLC), and Packet Data Convergence Protocol (PDCP)). Instead of the controller 1421, the BB processor 1426 can have a part or all of the above-described logic functions. The BB processor 1426 can be a memory that stores a communication control program, or a module that includes a processor configured to execute the program and a related circuit. Updating the program can allow the functions of the BB processor 1426 to be changed. The module can be a card or a blade that is inserted into a slot of the base station device 1420. Alternatively, the module can also be a chip that is mounted on the card or the blade. Meanwhile, the RF circuit 1427 can include, for example, a mixer, a filter, and an amplifier, and transmits and receives radio signals via the antenna 1410. Although FIG. 10 illustrates the example in which one RF circuit 1427 is connected to one antenna 1410, the present disclosure is not limited to thereto; rather, one RF circuit 1427 can connect to a plurality of antennas 1410 at the same time.

As illustrated in FIG. 10, the radio communication interface 1425 can include the multiple BB processors 1426. For example, the multiple BB processors 1426 can be compatible with multiple frequency bands used by gNB 1400. As illustrated in FIG. 10, the radio communication interface 1425 can include the multiple RF circuits 1427. For example, the multiple RF circuits 1427 can be compatible with multiple antenna elements. Although FIG. 10 illustrates the example in which the radio communication interface 1425 includes the multiple BB processors 1426 and the multiple RF circuits 1427, the radio communication interface 1425 can also include a single BB processor 1426 or a single RF circuit 1427.

### Second use case

FIG. 11 is a block diagram illustrating a second example of a schematic configuration of a gNB to which the technology in content of the present disclosure is applicable. The gNB 1530 includes a plurality of antennas 1540, a base station device 1550, and an RRH 1560. The RRH 1560 and each antenna 1540 can be connected to each other via an RF cable. The base station device 1550 and the RRH 1560 can be connected to each other via a high speed line such as a fiber optic cable. In one implementation, the gNB 1530 (or base station device 1550) herein can correspond to the electronic devices 300A described above.

Each of the antennas 1540 includes a single or multiple antenna elements such as multiple antenna elements included in a MIMO antenna and is used for the RRH 1560 to transmit and receive radio signals. As shown in FIG. 11, the gNB 1530 can include multiple antennas 1540. For example, multiple antennas 1540 can be compatible with multiple frequency bands used by the gNB 1530.

The base station device 1550 includes a controller 1551, a memory 1552, a network interface 1553, a radio communication interface 1555, and a connection interface 1557. The controller 1551, the memory 1552, and the network interface 1553 are the same as the controller 1421, the memory 1422, and the network interface 1423 described with reference to FIG. 10.

The radio communication interface 1555 supports any cellular communication scheme (such as LTE and LTE-Advanced) and provides radio communication to terminals positioned in a sector corresponding to the RRH 1560 via the RRH 1560 and the antenna 1540. The radio communication interface 1555 can typically include, for example, a BB processor 1556. The BB processor 1556 is the same as the BB processor 1426 described with reference to FIG. 10, except that the BB processor 1556 is connected to the RF circuit 1564 of the RRH 1560 via the connection interface 1557. As illustrated in FIG. 11, the radio communication interface 1555 can include the multiple BB processors 1556. For example, the multiple BB processors 1556 can be compatible with multiple frequency bands used by gNB 1530. Although FIG. 11 illustrates the example in which the radio communication interface 1555 includes multiple BB processors 1556, the radio communication interface 1555 can also include a single BB processor 1556.

The connection interface 1557 is an interface for connecting the base station device 1550 (radio communication interface 1555) to the RRH 1560. The connection interface 1557 can also be a communication module for communication in the above-described high speed line that connects the base station device 1550 (radio communication interface 1555) to the RRH 1560.

The RRH 1560 includes a connection interface 1561 and a radio communication interface 1563.

The connection interface 1561 is an interface for connecting the RRH 1560 (radio communication interface 1563) to the base station device 1550. The connection interface 1561 can also be a communication module for communication in the above-described high speed line.

The radio communication interface 1563 transmits and receives radio signals via the antenna 1540. The radio communication interface 1563 can typically include, for example, the RF circuitry 1564. The RF circuit 1564 can include, for example, a mixer, a filter, and an amplifier, and transmits and receives radio signals via the antenna 1540. Although FIG. 11 illustrates the example in which one RF circuit 1564 is connected to one antenna 1540, the present disclosure is not limited to thereto; rather, one RF circuit 1564 can connect to a plurality of antennas 1540 at the same time.

As illustrated in FIG. 11, the radio communication interface 1563 can include the multiple RF circuits 1564. For example, the multiple RF circuits 1564 can support multiple antenna elements. Although FIG. 11 illustrates the example in which the radio communication interface 1563 includes the multiple RF circuits 1564, the radio communication interface 1563 can also include a single RF circuit 1564.

It should be understood that the technical solutions of the present disclosure can be implemented with the following example embodiments.
1. An electronic device for a first secondary user, including a processing circuit configured to:
   receive an authorization response message from a Spectrum Access System (SAS), where the authorization response message includes information of one or more protection points;
   determine an interference power of the electronic device to a first protection point in the one or more protection points at a first frequency at which the first protection point operates, based at least on transmission parameters of the electronic device, a location of the first protection point and the first frequency; and
   record an interference threshold requirement of the first protection point and interference information into a blockchain network, where the interference information includes an interference power of the electronic device to the first protection point, to be used by the blockchain network to control aggregate interference of one or more secondary users to the first protection point.
2. The electronic device of clause 1, where the processing circuit is further configured to transmit an authorization request message to the SAS, the authorization request message including a maximum transmit power and a desired frequency to use for the first secondary user, where the desired frequency is a frequency initially used by the first secondary user or a frequency to which the first secondary user desires to switch.
3. The electronic device of clause 1, where the processing circuit is further configured to:
   obtain, from the blockchain network, control information for controlling use of the first frequency; and
   based on the control information, continue use of the first frequency or stop use of the first frequency when an associated dynamic protection area is activated.
4. The electronic device of clause 3, where the control information includes at least one of the following:
   a remove list containing secondary users needing to stop use of the first frequency when the associated dynamic protection area is activated; or
   a keep list containing secondary users allowed to continue use of the first frequency when the associated dynamic protection area is activated,
   where the first secondary user is implemented as a base station.
5. The electronic device of clause 4, where the processing circuit is further configured to:
   determine, via heartbeat exchange with the SAS, that the associated dynamic protection area is activated; and
   stop use of the first frequency based on that the first secondary user is contained in the remove list.
6. The electronic device of clause 4, where the processing circuit is further configured to:
   send a transaction request message to a second secondary user, the transaction request message suggesting to the second secondary user transfer, to the first secondary user, of use of the first frequency during activation of the associated dynamic protection area;
   receive a transaction approval message from the second secondary user, the transaction approval message approving the transfer; and
   record the transaction request message into the blockchain network, to be used by the blockchain network to update the remove list and/or the keep list.
7. The electronic device of clause 4, where the processing circuit is further configured to:
   receive a transaction request message from a second secondary user, the transaction request message suggesting to the first secondary user transfer, to the second secondary user, of use of the first frequency during activation of the associated dynamic protection area;
   send a transaction approval message to the second secondary user, the transaction approval message approving the transfer; and
   record the transaction approval message into the blockchain network, to be used by the blockchain network to update the remove list and/or the keep list.
8. The electronic device of clause 3, where the processing circuit is further configured to:
   obtain the control information that controls use of the first frequency from the blockchain network periodically or upon update of the control information; and
   provide the control information to the SAS via a heartbeat request message.
9. An electronic device for a blockchain, including a processing circuit configured to:
   record first interference information of a first plurality of secondary users for a first frequency, where the first interference information includes at least interference power of a first secondary user and interference power of a second secondary user to a first protection point; and
   based on a first interference threshold of the first protection point and the first interference information, perform control to make the first secondary user stop use of the first frequency and make the second secondary user continue use of the first frequency during activation of an associated dynamic protection area, such that aggregate interference of the first plurality of secondary users to the first protection point is below the first interference threshold.
10. The electronic device of clause 9, where the processing circuit is further configured to:
   record second interference information of a second plurality of secondary users for a second frequency, where the second interference information includes at least interference power of a third secondary user and interference power of a fourth secondary user to a second protection point; and
   based on a second interference threshold of the second protection point and the second interference information, perform control to make the third secondary user stop use of the second frequency and the fourth secondary user continue use of the second frequency during activation of the associated dynamic protection area, such that aggregate interference of the second plurality of secondary users to the second protection point is below the second interference threshold.
11. The electronic device of clause 10, where
   the first plurality of secondary users and the second plurality of secondary users include one or more secondary users that overlap or are different; and/or
   the first protection point and the second protection point are the same or different protection points.
12. The electronic device of clause 9, where the control includes:
   forming a remove list for the first frequency, the remove list containing secondary users needing to stop use of the first frequency when the associated dynamic protection area is activated; and/or forming a keep list for the first frequency, the keep list containing secondary users allowed to continue use of the first frequency when the associated dynamic protection area is activated.
13. The electronic device of clause 12, where forming the remove list for the first frequency includes:
   sorting the first plurality of secondary users based on a specific criterion, and sequentially superimposing interference powers of a portion of the secondary users such that an aggregate interference power does not exceed the first interference threshold; and
   including remaining secondary users of the first plurality of secondary users into the remove list.
14. The electronic device of clause 13, where the sorting based on the specific criterion includes:
   sorting the first plurality of secondary users in ascending order of interferences of the secondary users to the first protection point;
   sorting the first plurality of secondary users in descending order of communication requirements of the secondary users; or
   sorting the first plurality of secondary users based on a weighted order of interferences of the secondary users to the first protection point and corresponding communication requirements.
15. The electronic device of clause 12, where the processing circuit is further configured to:
   record a transaction request message from the first secondary user, the transaction request message suggesting to the second secondary user transfer, to the first secondary user, of use of the first frequency during activation of the associated dynamic protection area;
   record a transaction approval message from the second secondary user, the transaction approval message approving the transfer; and
   based on the transfer, delete the first secondary user from the remove list and include the second secondary user into the remove list, and/or delete the second secondary user from the keep list and include the first secondary user into the keep list.
16. An electronic device for a Spectrum Access System (SAS), including a processing circuit configured to:
   receive a first heartbeat request message from a first secondary user, the first heartbeat request message including a remove list used for a first frequency of a specific dynamic protection area; and
   send a first heartbeat response message to the first secondary user,
   where in response to activation of the specific dynamic protection area and the remove list including the first secondary user, the first heartbeat response message indicates the first secondary user to stop use of the first frequency.
17. The electronic device of clause 16, where the processing circuit is further configured to:
   receive a second heartbeat request message from a second secondary user; and
   send a second heartbeat response message to the second secondary user,
   where in response to activation of the specific dynamic protection area and the remove list including the second secondary user, the second heartbeat response message indicates the second secondary user to stop use of the first frequency.
18. The electronic device of clause 16, where the processing circuit is further configured to:
   receive an authorization request message from the first secondary user, where the authorization request message includes a maximum transmit power and a desired frequency to use for the first secondary user; and
   send an authorization response message to the first secondary user, where the authorization response message includes information of one or more protection points,
   where the electronic device does not calculate an interference power of the first secondary user to a first protection point at the first frequency.
19. An electronic device for a first secondary user, including a processing circuit configured to:
   obtain, from a blockchain network, a remove list for controlling use of a first frequency;
   send a transaction request message to a second secondary user based on the remove list including the first secondary user, the transaction request message suggesting to the second secondary user transfer, to the first secondary user, of use of the first frequency during activation of an associated dynamic protection area;
   receive a transaction approval message from the second secondary user, the transaction approval message approving the transfer; and
   record the transaction request message into the blockchain network, to be used by the blockchain network to update the remove list.
20. The electronic device of clause 19, where the processing circuit is further configured to:
   receive a transaction request message from the second secondary user based on the remove list not including the first secondary user, the transaction request message suggesting to the first secondary user transfer, to the second secondary user, of use of the first frequency during activation of the associated dynamic protection area;
   send a transaction approval message to the second secondary user, the transaction approval message approving the transfer; and
   record the transaction approval message into the blockchain network, to be used by the blockchain network to update the remove list.
21. A method for a first secondary user, including:
   receiving an authorization response message from a Spectrum Access System (SAS), where the authorization response message includes information of one or more protection points;
   determining an interference power of an electronic device to a first protection point in the one or more protection points at a first frequency at which the first protection point operates, based at least on transmission parameters of the electronic device, a location of the first protection point and the first frequency; and
   recording interference information into a blockchain network, where the interference information includes an interference power of the electronic device to the first protection point, to be used by the blockchain network to control aggregate interference of one or more secondary users to the first protection point.
22. A method for blockchain, including:
   recording first interference information of a first plurality of secondary users for a first frequency, where the first interference information includes at least interference power of a first secondary user and interference power of a second secondary user to a first protection point; and
   based on a first interference threshold of the first protection point and the first interference information, performing control to make the first secondary user stop use of the first frequency and make the second secondary user continue use of the first frequency during activation of an associated dynamic protection area, such that aggregate interference of the first plurality of secondary users to the first protection point is below the first interference threshold.
23. A method for a Spectrum Access System (SAS), including:
   receiving a first heartbeat request message from a first secondary user, the first heartbeat request message including a remove list used for a first frequency of a specific dynamic protection area; and
   sending a first heartbeat response message to the first secondary user,
   where in response to activation of the specific dynamic protection area and the remove list including the first secondary user, the first heartbeat response message indicates the first secondary user to stop use of the first frequency.
24. A method for a first secondary user, including:
   obtaining, from a blockchain network, a remove list for controlling use of a first frequency;
   sending a transaction request message to a second secondary user based on the remove list including the first secondary user, the transaction request message suggesting to the second secondary user transfer, to the first secondary user, of use of the first frequency during activation of an associated dynamic protection area;
   receiving a transaction approval message from the second secondary user, the transaction approval message approving the transfer; and
   recording the transaction request message into the blockchain network, to be used by the blockchain network to update the remove list.
25. A computer-readable storage medium, where executable instructions are stored therein, and when the executable instructions are executed by one or more processors, operations of the method according to any one of clauses 21 to 24 are implemented.
26. A computer program product, where the computer program product includes instructions, and when the instructions are executed by a computer, the method according to any one of clauses 21 to 24 is implemented.

The exemplary embodiments of the present disclosure have been described above with reference to the drawings, but the present disclosure is of course not limited to the above examples. Those skilled in the art can obtain various changes and modifications within the scope of the appended claims, and it should be understood that these changes and modifications will naturally fall within the technical scope of the present disclosure.

For example, a plurality of functions included in one unit in the above embodiments can be implemented by separate devices. Alternatively, the multiple functions implemented by the multiple units in the above embodiments can be implemented by separate devices, respectively. In addition, one of the above functions can be realized by multiple units. Needless to say, such a configuration is included in the technical scope of the present disclosure.

**In** this specification, the steps described in the flowchart include not only processes performed in time series in the described order, but also processes performed in parallel or individually rather than necessarily in time series. **In** addition, even in the steps processed in time series, needless to say, the order can be changed appropriately.

Although the present disclosure and its advantages have been described in detail, it should be understood that various modifications, replacements, and changes can be made without departing from the spirit and scope of the present disclosure as defined by the appended claims. Moreover, the terms "include", "include", or their any other variant in the embodiments of the present disclosure is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the existence of additional identical elements in the process, method, article, or apparatus that includes the element.

## Claims

1. An electronic device for a first secondary user, comprising a processing circuit configured to:
receive an authorization response message from a Spectrum Access System (SAS), wherein the authorization response message comprises information of one or more protection points;
determine an interference power of the electronic device to a first protection point in the one or more protection points at a first frequency at which the first protection point operates, based at least on transmission parameters of the electronic device, a location of the first protection point and the first frequency; and
record an interference threshold requirement of the first protection point and interference information into a blockchain network, wherein the interference information comprises an interference power of the electronic device to the first protection point, to be used by the blockchain network to control aggregate interference of one or more secondary users to the first protection point.

2. The electronic device of claim 1, wherein the processing circuit is further configured to transmit an authorization request message to the SAS, the authorization request message comprising a maximum transmit power and a desired frequency to use for the first secondary user,
wherein the desired frequency is a frequency initially used by the first secondary user or a frequency to which the first secondary user desires to switch.

3. The electronic device according to claim 1, wherein the processing circuit is further configured to:
obtain, from the blockchain network, control information for controlling use of the first frequency; and
based on the control information, continue use of the first frequency, or stop use of the first frequency when an associated dynamic protection area is activated.

4. The electronic device of claim 3, wherein the control information comprises at least one of the following:
a remove list containing secondary users needing to stop use of the first frequency when the associated dynamic protection area is activated; or
a keep list containing secondary users allowed to continue use of the first frequency when the associated dynamic protection area is activated,
wherein the first secondary user is implemented as a base station.

5. The electronic device according to claim 4, wherein the processing circuit is further configured to:
determine, via heartbeat exchange with the SAS, that the associated dynamic protection area is activated; and
stop use of the first frequency based on that the first secondary user is contained in the remove list.

6. The electronic device according to claim 4, wherein the processing circuit is further configured to:
send a transaction request message to a second secondary user, the transaction request message suggesting to the second secondary user transfer, to the first secondary user, of use of the first frequency during activation of the associated dynamic protection area;
receive a transaction approval message from the second secondary user, the transaction approval message approving the transfer; and
record the transaction request message into the blockchain network, to be used by the blockchain network to update the remove list and/or the keep list.

7. The electronic device according to claim 4, wherein the processing circuit is further configured to:
receive a transaction request message from a second secondary user, the transaction request message suggesting to the first secondary user transfer, to the second secondary user, of use of the first frequency during activation of the associated dynamic protection area;
send a transaction approval message to the second secondary user, the transaction approval message approving the transfer; and
record the transaction approval message into the blockchain network, to be used by the blockchain network to update the remove list and/or the keep list.

8. The electronic device according to claim 3, wherein the processing circuit is further configured to:
obtain the control information that controls use of the first frequency from the blockchain network periodically or upon update of the control information; and
provide the control information to the SAS via a heartbeat request message.

9. An electronic device for a blockchain, comprising a processing circuit configured to:
record first interference information of a first plurality of secondary users for a first frequency, wherein the first interference information comprises at least interference power of a first secondary user and interference power of a second secondary user to a first protection point; and
based on a first interference threshold of the first protection point and the first interference information, perform control to make the first secondary user stop use of the first frequency and make the second secondary user continue use of the first frequency during activation of an associated dynamic protection area, such that aggregate interference of the first plurality of secondary users to the first protection point is below the first interference threshold.

10. The electronic device according to claim 9, wherein the processing circuit is further configured to:
record second interference information of a second plurality of secondary users for a second frequency, wherein the second interference information comprises at least interference power of a third secondary user and interference power of a fourth secondary user to a second protection point; and
based on a second interference threshold of the second protection point and the second interference information, perform control to make the third secondary user stop use of the second frequency and the fourth secondary user continue use of the second frequency during activation of the associated dynamic protection area, such that aggregate interference of the second plurality of secondary users to the second protection point is below the second interference threshold.

11. The electronic device according to claim 10, wherein
the first plurality of secondary users and the second plurality of secondary users comprise one or more secondary users that overlap or are different; and/or
the first protection point and the second protection point are the same or different protection points.

12. The electronic device of claim 9, wherein the control comprises:
forming a remove list for the first frequency, the remove list containing secondary users needing to stop use of the first frequency when the associated dynamic protection area is activated; and/or
forming a keep list for the first frequency, the keep list containing secondary users allowed to continue use of the first frequency when the associated dynamic protection area is activated.

13. The electronic device of claim 12, wherein forming the remove list for the first frequency comprises:
sorting the first plurality of secondary users based on a specific criterion, and sequentially superimposing interference powers of a portion of the secondary users such that an aggregate interference power does not exceed the first interference threshold; and
including remaining secondary users of the first plurality of secondary users into the remove list.

14. The electronic device of claim 13, wherein the sorting based on the specific criterion comprises:
sorting the first plurality of secondary users in ascending order of interferences of the secondary users to the first protection point;
sorting the first plurality of secondary users in descending order of communication requirements of the secondary users; or
sorting the first plurality of secondary users based on a weighted order of interferences of the secondary users to the first protection point and corresponding communication requirements.

15. The electronic device according to claim 12, wherein the processing circuit is further configured to:
record a transaction request message from the first secondary user, the transaction request message suggesting to the second secondary user transfer, to the first secondary user, of use of the first frequency during activation of the associated dynamic protection area;
record a transaction approval message from the second secondary user, the transaction approval message approving the transfer; and
based on the transfer, delete the first secondary user from the remove list and include the second secondary user into the remove list, and/or delete the second secondary user from the keep list and include the first secondary user into the keep list.

16. An electronic device for a Spectrum Access System (SAS), comprising a processing circuit configured to:
receive a first heartbeat request message from a first secondary user, the first heartbeat request message comprising a remove list used for a first frequency of a specific dynamic protection area; and
send a first heartbeat response message to the first secondary user,
wherein in response to activation of the specific dynamic protection area and the remove list comprising the first secondary user, the first heartbeat response message indicates the first secondary user to stop use of the first frequency.

17. The electronic device according to claim 16, wherein the processing circuit is further configured to:
receive a second heartbeat request message from a second secondary user; and
send a second heartbeat response message to the second secondary user,
wherein in response to activation of the specific dynamic protection area and the remove list comprising the second secondary user, the second heartbeat response message indicates the second secondary user to stop use of the first frequency.

18. The electronic device according to claim 16, wherein the processing circuit is further configured to:
receive an authorization request message from the first secondary user, wherein the authorization request message comprises a maximum transmit power and a desired frequency to use for the first secondary user; and
send an authorization response message to the first secondary user, wherein the authorization response message comprises information of one or more protection points,
wherein the electronic device does not calculate an interference power of the first secondary user to a first protection point at the first frequency.

19. An electronic device for a first secondary user, comprising a processing circuit configured to:
obtain, from a blockchain network, a remove list for controlling use of a first frequency;
send a transaction request message to a second secondary user based on the remove list comprising the first secondary user, the transaction request message suggesting to the second secondary user transfer, to the first secondary user, of use of the first frequency during activation of an associated dynamic protection area;
receive a transaction approval message from the second secondary user, the transaction approval message approving the transfer; and
record the transaction request message into the blockchain network, to be used by the blockchain network to update the remove list.

20. The electronic device according to claim 19, wherein the processing circuit is further configured to:
receive a transaction request message from the second secondary user based on the remove list not comprising the first secondary user, the transaction request message suggesting to the first secondary user transfer, to the second secondary user, of use of the first frequency during activation of the associated dynamic protection area;
send a transaction approval message to the second secondary user, the transaction approval message approving the transfer; and
record the transaction approval message into the blockchain network, to be used by the blockchain network to update the remove list.

21. A method for a first secondary user, comprising:
receiving an authorization response message from a Spectrum Access System (SAS), wherein the authorization response message comprises information of one or more protection points;
determining an interference power of an electronic device to a first protection point in the one or more protection points at a first frequency at which the first protection point operates, based at least on transmission parameters of the electronic device, a location of the first protection point and the first frequency; and
recording interference information into a blockchain network, wherein the interference information comprises an interference power of the electronic device to the first protection point, to be used by the blockchain network to control aggregate interference of one or more secondary users to the first protection point.

22. A method for blockchain, comprising:
recording first interference information of a first plurality of secondary users for a first frequency, wherein the first interference information comprises at least interference power of a first secondary user and interference power of a second secondary user to a first protection point; and
based on a first interference threshold of the first protection point and the first interference information, performing control to make the first secondary user stop use of the first frequency and make the second secondary user continue use of the first frequency during activation of an associated dynamic protection area, such that aggregate interference of the first plurality of secondary users to the first protection point is below the first interference threshold.

23. A method for a Spectrum Access System (SAS), comprising:
receiving a first heartbeat request message from a first secondary user, the first heartbeat request message comprising a remove list used for a first frequency of a specific dynamic protection area; and
sending a first heartbeat response message to the first secondary user,
wherein in response to activation of the specific dynamic protection area and the remove list comprising the first secondary user, the first heartbeat response message indicates the first secondary user to stop use of the first frequency.

24. A method for a first secondary user, comprising:
obtaining, from a blockchain network, a remove list for controlling use of a first frequency;
sending a transaction request message to a second secondary user based on the remove list comprising the first secondary user, the transaction request message suggesting to the second secondary user transfer, to the first secondary user, of use of the first frequency during activation of an associated dynamic protection area;
receiving a transaction approval message from the second secondary user, the transaction approval message approving the transfer; and
recording the transaction request message into the blockchain network, to be used by the blockchain network to update the remove list.

25. A computer-readable storage medium, wherein executable instructions are stored therein, and when the executable instructions are executed by one or more processors, operations of the method according to any one of claims 21 to 24 are implemented.

26. A computer program product, wherein the computer program product comprises instructions, and when the instructions are executed by a computer, the method according to any one of claims 21 to 24 is implemented.
